# EUROPEAN PATENT APPLICATION

(11) **EP 1 057 835 A1**
(43) Date of publication of application: **06.12.2000**
(21) Application number: 00201891.9
(22) Date of filing: 29.05.2000
(51) Int. Cl.: C08F 4/52, C08F 110/02

(54) **Process for the homopolymerisation of ethylene**

(30) Priority: 03.06.1999 EP 99201774
(71) Applicant: DSM N.V., 6411 TE Heerlen (NL)
(72) Inventor: Gruter, Gerardus Johannes Maria, 6215 JC Maastricht (NL); Wang, Bing, 6162 EP Geleen (NL)
(74) Representative: Scheltus, Irma

(57) **Abstract**

Process for the homopolymerisation of ethylene at a temperature between -50°C and 50°C with a catalyst according to the formula

(CpRₙ)₂M.xL, (I),

wherein
M = Sm, Eu or Yb,
Cp = a cyclopentadienyl ligand,
R = a substituent on the cyclopentadienyl ligand,
n = 2 - 5,
L = a Lewis base and
x = 0 - 3,
characterised in that the catalyst concentration is 10⁻² - 1 mmol/l.

With the process according to the invention a homopolymer of ethylene with a target M_{w} can be produced.

## Description

The invention relates to a process for the homopolymerisation of ethylene at a temperature between -50°C and 50°C with a catalyst according to the formula

(CpRₙ)₂M.xL, (I)

wherein
M = Sm, Eu or Yb,
Cp = a cyclopentadienyl ligand,
R = a substituent on the cyclopentadienyl ligand,
n = 2 - 5,
L = a Lewis base and
x = 0 - 3.

Such a process is described by Yasuda et al. in an article in Macromol. Symp., 1995, 95, 203-216. In this article a process is disclosed for the homopolymerisation of ethylene at room temperature with

(Cp*₂Sm(II)).2THF (II)

as a catalyst.

In formula II the abbreviations have the following meaning:
Cp* = a pentamethylcyclopentadienyl ligand and
THF = tetrahydrofuran.

With this process a homopolymer of ethylene is produced with an Mw/Mn of 2.28. Which is a relatively broad Mw/Mn. A homopolymer with a lower Mw/Mn is only produced during the first minute of the reaction.

Surprisingly it is now discovered that when the catalyst concentration during the reaction is 10⁻² - 1 mmol/l the homopolymer of ethylene has an M_{w}/Mₙ ≤ 1.8 even after a longer polymerisation time than 1 minute.

The catalyst used in the process according to the invention has a structure according to the formula

(CpRₙ)₂M.xL (I)

wherein
M = Sm, Eu or Yb,
Cp = a cyclopentadienyl ligand,
R = a substituent on the cyclopentadienyl ligand,
n = 2 - 5,
L = a Lewis base and
x = 0 - 3.

The cyclopentadienyl ligand is substituted with 2-5 substituents. The substituents can be the same or different and are, for instance, hydrogen or hydrocarbon substituents with 1-20 carbon atoms or substituted hydrocarbon substituents in which one or more hydrogen atoms have been substituted by halogen atoms, halogen substituents or organic silyl substituents. The substituents may also contain other elements from groups 14-17 of the Periodic System of the Elements. Examples of hydrocarbon substituents are alkyl, aryl and aralkyl substituents, such as for instance methyl, ethyl, propyl, isopropyl, butyl, hexyl, octyl, 2-ethylhexyl, decyl, phenyl, benzyl, dimethyl aminoethyl or methoxyethyl. It is also possible for two adjacent hydrocarbon substituents to be connected to form a ring system, such as for instance indenyl or tetrahydroindenyl. Examples of halogen substituents are fluorine, chlorine and bromine. Examples of organic silyl substituents are trimethylsilyl, triethylsilyl, phenyldimethylsilyl, diphenylmethylsilyl, triphenylsilyl and (dimethyl)-(dimethylamino)silyl.

L is a Lewis base and is, for instance, an ether, a thioether, an amine or a phosphine. Examples of ethers are dimethylether, diethylether, dimethoxyethane, and tetrahydrofuran (THF). Examples of amines are trimethylamine, triethylamine and aniline. Examples of thioethers are diethylsulphide and thiofuran. Examples of phosphines are trimethylphosphine and triethylphosphine.

Homopolymerisation of ethylene can be effected in a known manner in a liquid reaction medium as a suspension polymerisation.

The homopolymerisation process according to the invention is performed at a temperature between -50°C and 50°C and with a catalyst concentration of 10⁻² - 1 mmol/l.

With the process according to the invention it is possible to produce a homopolymer of ethylene with a Mw/Mn ≤ 1.8.

Because the process according to the invention is a living polymerisation reaction a homopolymer of ethylene can be produced with a target Mw. The term 'target Mw' here and hereafter means an Mw that is determined before the polymer is produced. Starting from the target Mw the process parameters to perform the polymerisation reaction can be determined before the polymerisation reaction is started.

There are in principle two methods to produce a homopolymer of ethylene with a target Mw.

The first method is by starting the polymerisation with a fixed amount of ethylene related to the target Mw and polymerise untill all ethylene is consumed or untill the catalyst is quenched.

To determine the target Mw you want to obtain according to this method the starting point is that with a certain amount of catalyst the same amount of polyethylene can be produced with a predetermined Mw. For instance, with 1 mmol catalyst and 1000 mmol ethylene 1 mmol of polyethylene can be produced consisting of 1000 ethylene monomer units. So, starting from the target Mw the amount of catalyst and the amount of ethylene necessary to obtain a certain amount of polyethylene with the target Mw can be determined before the polymerisation reaction is started.

In this first method it is preferred that a fixed amount of ethylene is dosed to the reactor, whereafter the catalyst is added to the reactor. This is because the polymerisation reaction starts immediately after the catalyst is dosed. When the catalyst is introduced first to the reactor whereafter the ethylene is dosed the produced polyethylene can have a broader Mw.

It is also preferred that at the start of the polymerisation the molar ratio ethylene:M is lower than 10⁵. When this ratio is higher the Mw of the polyethylene produced will become to high to be processable.

According to the second method polyethylene is produced under constant ethylene pressure during a fixed polymerisation time related to the target Mw, whereafter the polymerisation is stopped.

The target Mw is according to this method determined by first determining the amount of insertions of ethylene per second for a certain catalyst at a predetermined ethylene pressure and temperature.

After the amount of insertions per second is known and the target Mw is known the necessary polymerisation time can be calculated.

When the polymerisation reaction is performed according to the second method the ethylene pressure is preferably 1.10⁵ to 35.10⁵ Pa and the polymerisation time is preferably 0.5 second to 1 hour.

The polymerisation procedure will be elucidated on the basis of a slurry polymerisation.

Any liquid that is inert relative to the catalyst system can be used as dispersion agent during the slurry polymerisation. One or more saturated, straight or branched aliphatic hydrocarbons, such as butanes, pentanes, hexanes, heptanes, pentamethyl heptane or mineral oil fractions such as light or regular petrol, naphtha, kerosine or gas oil are suitable for that purpose. Aromatic hydrocarbons, for instance benzene and toluene, can be used, but because of their cost as well as on account of safety considerations, it will be preferred not to use such solvents for production on a technical scale. In polymerisation processes on a technical scale, it is preferred therefore to use as solvent the low-priced aliphatic hydrocarbons or mixtures thereof, as marketed by the petrochemical industry. If an aliphatic hydrocarbon is used as solvent, the solvent may yet contain minor quantities of aromatic hydrocarbon, for instance toluene. The solvent may also contain small quantities of polar solvents such as THF or Et₂O. Polar solvents generally reduce catalyst activity therefore providing better control and on the other hand polar solvents may increase the catalyst solubility. For some catalysts addition of Lewis base enhances the formation of polymer with narrow MWD (e.g. Example XIV & XV versus Example XVI and Example XIX versus Example XX).

Drying or purification is desirable if such solvents are used; this can be done without problems by the average person skilled in the art. Polymerisation can be effected discontinuously, at atmospheric pressure, but also at an elevated pressure of up to 500 Mpa.

The invention will now be elucidated by means of the following non-restrictive examples.

### EXAMPLES

All the operations were performed under nitrogen by using standard Schlenk techniques.

THF means tetrahydrofuran,
n-Bu means n-butyl and
Me means methyl.

### Example I:

### Synthesis of SmI₂:

The dry Schlenk flask was filled with 180 ml THF and 3.06g Sm. At room temperature, 4.66g iodide was added slowly. After stirring 3 hours, the reaction temperature was raised and the reaction mixture was refluxed for 2 days to get a dark blue solution (at room temperature, the saturated THF solution of SmI₂ is 0.1M).

### Example II:

### Synthesis of n-BuMe₄C₅H:

4.98g 2,3,4,5-tetramethyl-2-cyclopentenone (36.03 mmol) was solved in 60 ml dry diethyl ether. 23.0 ml n-butyl lithium (1.6 M in hexane, 36.8 mmol) was slowly added to the solution which was cooled to -78°C. After about 2 hours, the reaction temperature was raised to -30°C and the reaction mixture was stirred another 2 hours. Then 2 ml water was added to the above reaction flask. A few minutes later, 7.12g p-toluenesulfonic acid monohydrate was added at -30°C and the reaction mixture was stirred overnight. After purification, n-butyltetramethylcyclopentadiene, being a pale yellow oil (5.51g, 30.96 mmol) was obtained (yield 85.9%).

### Example III:

### Synthesis of n-BuMe₄C₅K:

1.35g n-butyltetramethylcyclopentadiene (7.6 mmol) was added to a THF suspension of potassium hydride (0.5g, 12.5 mmol). The reaction mixture was stirred overnight. A pale yellow solution was being formed. After the reaction mixture was washed by KPB, a white powder (1.24g) was obtained.

### Example IV:

### Synthesis of KC₅Me₅:

The preparation of KC₅Me₅ was performed as in example III starting with dry pentamethylcyclopentadiene. A white powder was obtained; 95.1% yield.

### Example V:

### Synthesis of Et₃C₅H₂K;

The prepatation of Et₃C₅H₂K was performed as in Example III starting with dry Et₃C₅H₃. A white powder was obtained; 83% yield.

### Example VI:

### Synthesis of (Me₅C₅)₂Sm(THF)₂ :

A dry Schlenk flask was charged with 0.88g (5.06 mmol) potassium pentamethylcyclopentadienyl and 10ml THF. After stirring 30 minutes, 25ml THF solution of SmI₂ (0.1M, 2.5 mmol) was added to the above suspension at room temperature. The colour of the suspension immidiately changed from dark blue to purple, and the reaction mixture was stirred overnight. The THF solvent was removed by vacuum to get a gray solid and 100ml toluene was added and stirred about 6 hours to get a purple solution and a white precipitate. The white solid was separated by filtration and a clear purple filtrate was obtained and the solvent was removed by vacuum to get a purple solid. In order to get a pure complex, 5ml THF was added into the flask and stirred a while, THF was removed again. 1.2g purple solid was produced (yield 78%).

### Example VII:

### Synthesis of (n-BuMe₄C₅)₂Sm(THF)₂:

The synthetic route is similar to the route described in example VI. SmI₂ (25ml, ∼0.1M) and potassium n-butyltetramethylcyclopentadienyl (1.24g, 5.7 mmol), yield: 48.76%.

### Example VIII:

### Synthesis of (Et₃C₅H₂)₂Sm(THF)₂:

The dry Et₃C₅H₂K salt was charged with 38 ml SmI₂ solution (0.95 eq.) and stirred overnight. The catalyst was purified by removing the solution from the KI-salt. The THF was evaporated and the catalyst was washed with KPB. After that, the catalyst was dried and used to make a 0.01 M catalyst solution.

### Examples IX-XV:

A dry Schlenk vessel with a stirring bar was charged with 100 ml toluene. Ethylene was bubbled through the toluene and the mixture was brought to 0°C. The ethylene pressure was 1.10⁵ Pa. After 30 minutes a toluene solution (0,01 mol/l) of the catalyst was introduced. The polymerisation started immediately. After the polymerisation time expired, 2 ml methanol was added to stop the polymerisation reaction. The solvent was removed by filtration, then the polymer was washed with 30 ml acetone and 30 ml hexane, respectively. Thereafter the polymer was dried under vacuum at 100°C.

### Examples XVI-XX:

A dry Schlenk vessel with a stirring bar was charged with 100 ml toluene. Ethylene was bubbled through the toluene at room temperature. The ethylene pressure was 1.10⁵ Pa. After 30 minutes a solution (0,01 mol/l) of the catalyst was introduced. In experiments marked with an asteriks (*) the catalyst solution contained 0.2% THF. The polymerisation started immediately. After the polymerisation time expired, 2 ml methanol was added to stop the polymerisation reaction. The solvent was removed by filtration, then the polymer was washed with 30 ml acetone and 30 ml hexane, respectively. Thereafter the polymer was dried under vacuum at 100°C.

The catalyst concentration in the reactor and the polymerisation time are given in Table I.

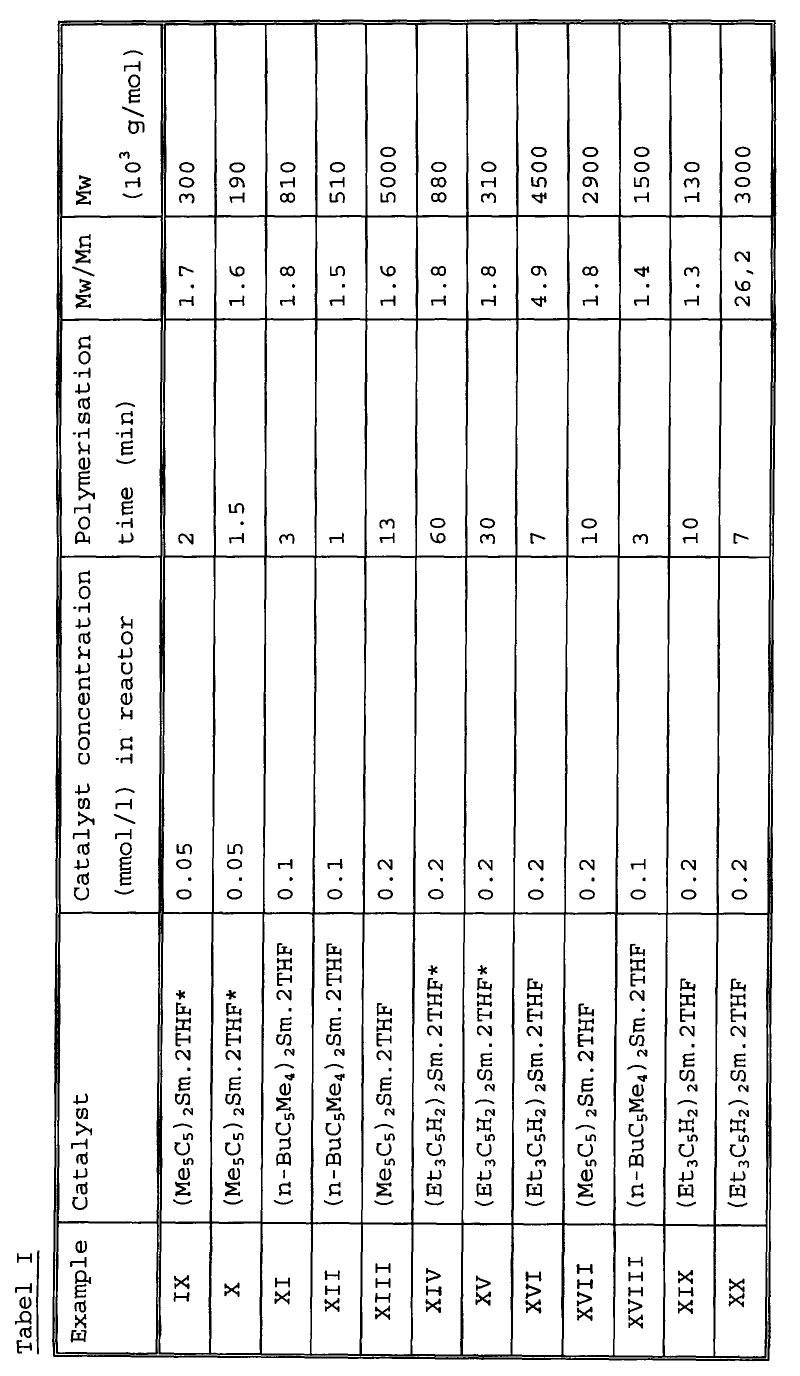

## Claims

1. Process for the homopolymerisation of ethylene at a temperature between -50°C and 50°C with a catalyst according to the formula
(CpRₙ)₂M.xL, (I)
wherein
M = Sm, Eu or Yb,
Cp = a cyclopentadienyl ligand,
R = a substituent on the cyclopentadienyl ligand,
n = 2 - 5,
L = a Lewis base and
x = 0 - 3,
characterised in that the catalyst concentration is 10⁻² - 1 mmol/l.

2. Process according to claim 1, characterised in that a homopolymer of ethylene with a target M_{w} is produced.

3. Process according to claim 2, characterised in that a homopolymer of ethylene with a target M_{w} is produced by starting the polymerisation with a fixed amount of ethylene related to the target M_{w} and polymerise untill all ethylene is consumed or the catalyst is quenched.

4. Process according to any one of claims 2-3, characterised in that at the start of the polymerisation the molar ratio ethylene:M is lower than 10⁵.

5. Process according to any one of claims 2-4, characterised in that a fixed amount of ethylene is dosed to the reactor, whereafter the catalyst is added to the reactor.

6. Process according to claim 2, characterised in that a homopolymer of ethylene with a target M_{w} is produced by polymerisation under constant ethylene pressure during a fixed time related to the target M_{w}, whereafter the polymerisation is stopped.

7. Process according to claim 1, 2 or 6, characterised in that the ethylene pressure is 1.10⁵ to 35.10⁵ Pa.

8. Process according to any one of claims 6-7, characterised in that the polymerisation time is 0.5 second to 1 hour.

## Amended claims

### Amended claims in accordance with Rule 86(2) EPC.

1. Process for the homopolymerisation of ethylene at a temperature between -50ºC and 50ºC with a catalyst according to the formula
(CpRₙ)₂M.xL, (I)
wherein
M = Sm, Eu or Yb,
Cp = a cyclopentadienyl ligand,
R = a substituent on the cyclopentadienyl ligand,
n = 2 - 5,
L = a Lewis base and
x = 0 - 3,
characterised in that the catalyst concentration is 10⁻² - 1 mmol/l and in that a homopolymer of ethylene with a target M_{w} is produced.

2. Process according to claim 1, characterised in that a homopolymer of ethylene with a target M_{w} is produced by starting the polymerisation with a fixed amount of ethylene related to the target M_{w} and polymerise untill all ethylene is consumed or the catalyst is quenched.

3. Process according to any one of claims 1-2, characterised in that at the start of the polymerisation the molar ratio ethylene:M is lower than 10⁵.

4. Process according to any one of claims 1-3, characterised in that a fixed amount of ethylene is dosed to the reactor, whereafter the catalyst is added to the reactor.

5. Process according to claim 1, characterised in that a homopolymer of ethylene with a target M_{w} is produced by polymerisation under constant ethylene pressure during a fixed time related to the target M_{w}, whereafter the polymerisation is stopped.

6. Process according to claim 1 or 5, characterised in that the ethylene pressure is 1.10⁵ to 35.10⁵ Pa.

7. Process according to any one of claims 5-6, characterised in that the polymerisation time is 0.5 second to 1 hour.
